# FASCICULE DE BREVET EUROPEEN

(11) **EP 0 745 703 B1**
(45) Date de publication et mention de la délivrance du brevet: **27.06.2001**
(21) Numéro de dépôt: 96420166.9
(22) Date de dépôt: 09.05.1996
(51) Int. Cl.: C25F 3/20, C25F 3/16

(54) **Procédé de polissage électrolytique en deux étapes de surfaces métalliques pour obtenir des propriétés optiques améliorées et produits résultants**
Verfahren zur elektrolytischen Polieren von metallischen Oberflächen in zwei Stufen um verbesserten optischen Eigenschaften zu erhalten und hergestellte Produkte
Process for electrolytic polishing of metallic surfaces in two steps for improving their optical properties and resulting products

(30) Priorité: 12.05.1995 FR 9505880
(43) Date de publication de la demande: 04.12.1996
(73) Titulaire: Société Anonyme de Traitement des Métaux et Alliages (SATMA), 38570 Goncelin (FR)
(72) Inventeur: Allegret, Francis, 38570 Goncelin (FR)
(74) Mandataire: Mougeot, Jean-Claude

(56) Documents cités:
- EP-A- 0 399 172
- EP-A- 0 495 755
- DATABASE WPI Week 8911 Derwent Publications Ltd., London, GB; AN 89-079590 XP002009803 & JP-A-01 028 397 (MITSUBISHI ALUMINIUM) , 30 Janvier 1989
- DATABASE WPI Week 8713 Derwent Publications Ltd., London, GB; AN 87-089072 XP002009804 & JP-A-62 037 393 (MITSUBISHI DENKI KK) , 18 Février 1987
- DATABASE WPI Section Ch, Week 8827 Derwent Publications Ltd., London, GB; Class M11, AN 88-187494 XP002010103 & JP-A-63 125 697 (TOKYO PLATING KK) , 28 Mai 1988

## Description

### DOMAINE TECHNIQUE

L'invention concerne un procédé de polissage électrolytique en deux étapes par anodisation de surfaces de produits métalliques, en particulier l'aluminium ou ses alliages, pour obtenir un poli ultra fin conduisant en particulier à une micro-rugosité très faible et en conséquence à une réflectivité améliorée et/ou une irisation réduite et/ou des images parfaites. L'invention concerne également les produits obtenus et leurs applications.

### ETAT DE LA TECHNIQUE

Pour obtenir des plaques (ou formats), des bandes ou plus généralement des produits réfléchissants à base d'aluminium ou de ses alliages il est connu d'utiliser classiquement des laminés "brillant" ou "grand brillant", sur lesquels on procède à une étape de polissage électrolytique à l'aide d'un bain classiquement composé par exemple d'un mélange d'acide phosphorique, d'acide sulfurique et d'anhydride chromique, à une étape de décapage sélectif de la couche d'oxyde résiduel, à une étape de protection par anodisation poreuse également électrolytique à l'aide d'un bain à base d'acide sulfurique ou oxalique ou chromique ou phosphorique permettant de former une couche d'oxyde poreuse dont le diamètre moyen du motif hexagonal de base est généralement compris entre 70 et 200 nm, la rugosité du métal à l'interface métal/oxyde étant supérieure à 1,5 nm(Ra), puis à une étape de colmatage de la couche poreuse par traitement à l'eau bouillante.

Habituellement la rugosité de la surface colmatée obtenue n'est généralement pas inférieure à 5 nm. On obtient alors une réflectivité spéculaire (dans une direction de 20°) de l'ordre de 78% au maximum.

Dans la suite du texte et saut indication contraire, toutes les valeurs de réflectivité citées seront des réflectivités spéculaires correspondant à celles obtenues à l'aide d'un réflectomètre du Dr LANGE, selon la norme DIN 67-530.

Le polissage d'une surface métallique peut aussi être effectué chimiquement ou mécaniquement pour obtenir des résultats équivalents.

Pour améliorer la réflectivité, il est connu de procéder en plus des traitements précédents à une série de dépôts successifs effectués habituellement sous vide en phase gazeuse: par exemple un dépôt d'aluminium suivi d'un double dépôt, dit bicouche, de Si(2 puis de TiO₂. Un tel dépôt complexe permet d'obtenir 86% de réflectivité grâce à des phénomènes interférentiels obtenus par un choix judicieux des indices de réfraction et des épaisseurs respectives des couches d'oxydes voisines de λ/4n, λ étant la longueur d'onde moyenne du rayonnement lumineux et n l'indice de réfraction de l'oxyde. Il est aussi possible de déposer successivement plusieurs bicouches ce qui permet d'améliorer la réflectivité et d'approcher 100% pour un nombre élevé de bicouches.

Mais l'obtention d'un tel résultat nécessite une succession de traitements électrochimiques et sous vide qui rendent le produit final particulièrement onéreux, difficile et complexe à réaliser, en particulier lorsqu'il s'agit d'effectuer des dépôts sous vide sur des bandes de grande largeur défilant en continu.

Il est également connu du brevet Alusuisse-Lonza CA 2059046 des articles d'aluminium (ou de ses alliages), non anodisés, adaptés au dépôt de couches en phase gazeuse, lesdites couches facilitant une réflexion avec des pertes en énergie aussi faibles que possible. Lesdits articles non anodisés sont obtenus de préférence par laminage. Ils peuvent être polis électrolytiquement ou électrochimiquement. Bien que des rugosités dans un très large domaine (de 1 à 1000 nm(Ra) soient indiquées, les moyens permettant d'obtenir les plus faibles rugosités ne sont pas détaillés. En fait la demanderesse a mesuré qu'avec ce type de procédé la rugosité était en général supérieure à 30 nm. Ces surfaces peuvent être recouvertes, comme précédemment, par voie physique d'une ou plusieurs couches transparentes pour accroître la réflectivité. Les articles obtenus ne présentent pas d'irisation.

### Sont également connus les procédés suivants :

Dans le brevet JP-A-1028397 il est décrit un procédé de polissage de roues d'automobiles comportant un polissage mécanique donnant une rugosité d'environ 100 um suivi d'un polissage électrolytique correspondant à la formation d'une couche d'oxyde poreuse.

Dans le brevet JP-A-62037393, il est décrit une finition de miroirs à base d'aluminium comportant un polissage chimique ou mécanique conduisant à une rugosité pouvant atteindre 50 nm, suivi d'un traitement anodique qui selon les exemples correspondent à une couche d'oxyde poreuse ou barrière.

Dans le brevet JP-A-63125697 il est décrit le brillantage d'un matériau d'aluminium en utilisant un polissage ou un laminage suivi d'un polissage chimique, dont les conditions opératoires exemplifiées montrent qu'il conduit à une couche d'oxyde poreuse, puis d'une anodisation.

Compte tenu de ce qui précède, la demanderesse a cherché à mettre au point un procédé de micropolissage simple à mettre en oeuvre industriellement et économique permettant en particulier d'atteindre des performances de micro-rugosité et de réflectivité accrues, par exemple : réflectivité spéculaire améliorée dépassant généralement 80% avec un produit de départ du type laminé grand brillant, alors que la réflectivité de ce produit traité classiquement selon l'art antérieur ne dépasse pas 78%. L'irisation est évitée, mais si besoin est une coloration uniforme peut être obtenue.

Elle a également cherché à mettre au point des produits présentant de hautes performances, optiques ou autres, grâce à une très faible micro-rugosité de surface.

### DESCRIPTION DE L'INVENTION

L'invention est un procédé de polissage d'une surface métallique comprenant une première étape de polissage classique par voie chimique ou de préférence électrolytique, dans une solution pouvant contenir entre autres de l'acide phosphorique, pour obtenir une rugosité comprise entre 4 et 10 nm, et une deuxième étape de micropolissage électrolytique par anodisation dans une solution d'acide minéral, organique ou mixte, pour former une couche d'oxyde de type barrière.

Il est essentiel que la première étape soit un polissage chimique ou électrolytique pour obtenir la très faible rugosité recherchée, les polissages du type mécanique ne permettant pas d'obtenir un tel résultat. Il est à noter qu'un polissage électrolytique est 5 particulièrement avantageux car il se révèle beaucoup plus efficace et permet d'obtenir de meilleures performances optiques (netteté d'image).

Il est avantageux d'effectuer un décapage sélectif de la couche d'oxyde formée lors de la première étape de polissage et/ou lors de l'étape de micropolissage.

Le décapage intermédiaire effectué après l'étape de polissage permet d'éliminer sélectivement, comme dans l'art antérieur, la couche d'oxyde résiduel apparaissant lors de ladite première étape de polissage. Bien qu'avantageux il n'est cependant pas nécessaire de l'effectuer, car le micropolissage s'effectue aussi bien en présence de ladite couche d'oxyde résiduel, puisqu'il s'effectue sous cette couche.

Le décapage final effectué après l'étape de micropolissage permet d'éliminer sélectivement la couche barrière dans le cas où l'on souhaite disposer par exemple d'une surface métallique telle quelle, soit en vue d'application spéciale se satisfaisant d'une telle surface soit en vue d'y former une couche supplémentaire de protection ou pour en améliorer les qualités optiques comme cela sera vu plus loin. Il permet également, dans le cas où il n'y a pas eu de décapage intermédiaire, d'éliminer la couche d'oxyde résiduel qui empêcherait par exemple tout dépôt ultérieur d'une couche supplémentaire.

Le décapage final peut être omis si l'on veut conserver la couche barrière formée lors du micropolissage.

Les surfaces traitées selon l'invention possèdent une micro-rugosité inférieure à 1 nanomètre Ra, et une surface développée inférieure à 103% (par rapport à la surface idéalement plane pour laquelle la rugosité Ra est égale à 0 nm et la surface développée est 100%).

Généralement une surface métallique peut être caractérisée par une macro-rugosité et une micro-rugosité.

Les procédés de l'art antérieur agissent principalement sur la macro-rugosité en éliminant les aspérités de surface (rayures et lignes de laminage ou de filage, arrachures, défauts de surfaces dûs au moulage, etc...); par exemple la rugosité évoquée précédemment dans le brevet CA 2059046 peut, semble-t-il, être au mieux de l'ordre de 1 à 10 nm(Ra), sans que l'homme du métier ne sache comment obtenir les rugosités les plus faibles.

La présente invention permet de compléter le macro-polissage par un micro-polissage qui permet d'abaisser la rugosité jusqu'à des valeurs très basses, toujours inférieures à 1 nm Ra, habituellement à 0,8 nm Ra, voire 0,5 nm Ra, l'art antérieur ne décrivant jamais aucun procédé permettant d'atteindre de tels niveaux.

L'invention peut donc être avantageusement utilisée non seulement pour polir et améliorer les surfaces du type brillant ou grand brillant. Mais elle présente également un grand intérêt pour améliorer la finition des surfaces plus grossières telles que les surfaces brut de laminage (plus connu sous le vocable anglo-saxon de "mill finish"), ou des surfaces modifiées, en particulier de type mat, brossé, martelé, lapidé, granité, etc... à réflexion essentiellement diffuse; on obtiendra alors un micro-polissage qui se superpose en quelque sorte à l'état de surface initial avec un abaissement important de la micro-rugosité et, par conséquent, un gain également important de la réflectivité totale.

Les pièces de départ peuvent être variées et sont généralement des formats, des bandes défilant en continu ou des objets de géométrie quelconque. Pour les pièces courantes réfléchissantes, l'état de surface montre généralement une rugosité Ra comprise entre 10 et 150 nm et une réflectivité de 61 à 78%.

Avant de procéder aux opérations de polissage selon l'invention, on effectue généralement une opération de dégraissage de la surface à traiter. On pratique alors le premier traitement de polissage classique par voie chimique ou de préférence électrolytique par anodisation dans un bain de polissage par exemple à base d'acide phosphorique, par exemple à l'aide d'un mélange en solution aqueuse d'acide phosphorique, d'acide sulfurique et d'acide nitrique, ou d'un mélange d'acide phosphorique, d'acide sulfurique et d'anhydride chromique, ou de tout autre bain de polissage.

Ce polissage et suivi préférentiellement d'une étape de désoxydation ou décapage sélectif à l'aide d'une solution composée par exemple d'un mélange d'acide phosphorique et d'anhydride chromique. Dans une variante de l'invention, ce décapage intermédiaire n'est pas utilisé, comme cela sera vu plus loin.
Dans cette étape, seul l'oxyde résiduel provenant de l'opération de polissage électrolytique est dissous, la surface métallique restant inaltérée.

La surface, préférentiellement désoxydée, est ensuite soumise au deuxième traitement d'anodisation dans une solution d'acides minéraux, organiques ou mixtes, dans des conditions permettant la formation d'une couche barrière compacte (généralement à une tension comprise entre 15 et 1000 V et préférentiellement entre 70 à 350 V)

L'épaisseur de la couche anodique ainsi formée est généralement comprise entre 20 et 2000 nm et préférentiellement de 20 à 1400 nm.

La formation de la couche barrière est particulièrement efficace et permet d'obtenir les plus faibles rugosités; elle est de préférence amorphe et la tension permet de régler l'épaisseur de la couche anodique.

La couche d'oxyde formée lors du deuxième traitement d'anodisation (micropolissage) peut alors être décapée sélectivement comme cela a été dit plus haut.

Un tel procédé présente l'avantage de mettre en oeuvre des traitements de type classique économiques, facilement industrialisables, en particulier pour le traitement en continu, tout en apportant une amélioration significative des caractéristiques des surfaces traitées.

De façon inattendue, il apparaît que le fait de procéder à la formation anodique d'une couche d'oxyde selon l'invention après une opération habituelle de polissage électrolytique permet d'obtenir un micro-polissage complémentaire particulièrement efficace, que l'on peut qualifier de super-polissage, de la surface.

En effet, des examens en microscopie à force atomique en mode taping (TM-AFM) ont montré que la structure alvéolaire en nid d'abeille de l'interface métal-oxyde obtenu après un polissage électrolytique classique présentait en général une rugosité Ra de 4 à 10 nm, un diamètre des cellules hexagonales de base de 70 à 200 nm (des dimensions supérieures à celles qui ont été observées sont également possibles) et une surface développée de 110 à 130% (par rapport à une surface idéalement plane comme vu plus haut) et que cette structure alvéolaire était complètement nivelée par la formation de la couche barrière. Lors de cette formation il s'effectue un super-polissage tel que, dans ce cas, la rugosité devient inférieure à 1 nm(Ra); la surface développée est alors réduite respectivement à moins de 101% ou de 103 %. En conséquence, la réflectivité est augmentée d'au moins 2 points.

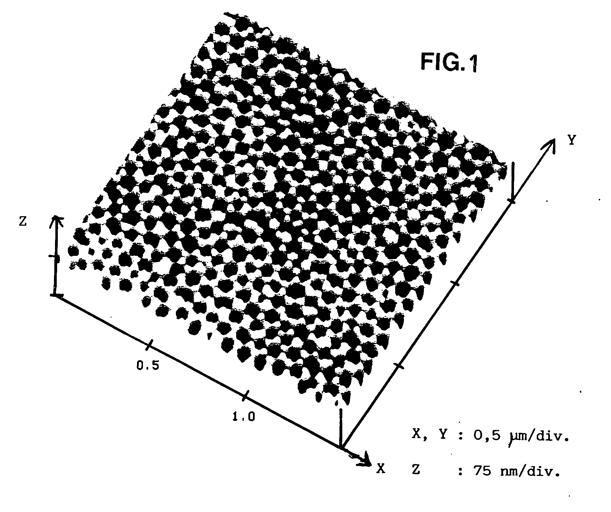

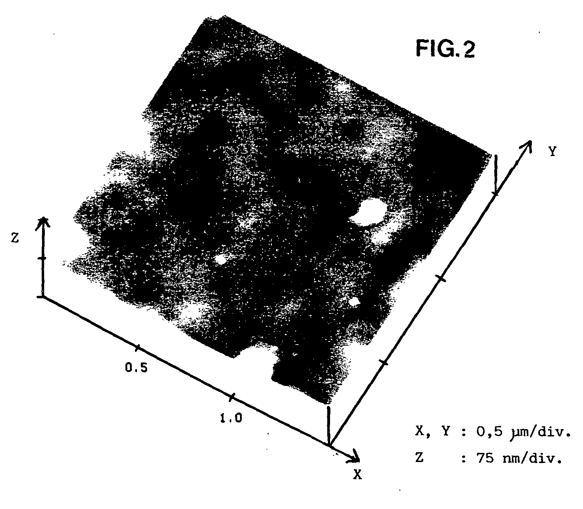

Les figures 1 et 2 montrent la topographie des surfaces métalliques en trois dimensions (perspective), respectivement après la première étape de polissage électrolytique classique et à la suite du traitement de micropolissage par formation anodique d'une couche barrière selon l'invention (le micro-polissage) et bien sûr, dans les deux cas, après dissolution sélective de la couche d'oxyde formée.

Sur la fig. 1 les zones sombres correspondent aux alvéoles en forme de nid d'abeille obtenus à la surface d'une plaque d'Al de 99,99% de pureté après polissage électrolytique classique et désoxydation à l'aide d'une solution phospho-chromique et les zones claires aux parois séparant les alvéoles.

Sur la coupe effectuée dans le plan orienté dans la direction Z (verticale) on voit nettement le profil de la rugosité.

L'examen de la fig.2, où la plaque précédente a été soumise au traitement anodique de formation de couche barrière d'épaisseur 280 nm sous 200 V puis au décapage de cette couche, montre que le relief en nid d'abeille précédente a disparu et a été remplacé par une surface presque parfaitement lisse qui ne présente plus qu'une légère ondulation ayant par ailleurs une amplitude très faible et un pas élevé, dont on peut voir la trace sur le plan dans la direction Z.

Le procédé de l'invention convient particulièrement à l'aluminium et ses alliages, de même qu'au magnésium et ses alliages. Il est également applicable à Ti, Ta, Zr, Hf et à leurs alliages.

Les oxydes formés, de même que la couche barrière selon l'invention, sont à base de l'oxyde des métaux utilisés correspondants, par exemple l'alumine dans le cas de l'aluminium et de ses alliages.

Des exemples de composition des divers bains de traitement, ainsi que des conditions opératoires, sont indiqués ci-après; ce sont eux qui ont été utilisés pour effectuer les exemples qui sont donnés plus loin.

D'autres compositions ou conditions opératoires produisant le même effet sont possibles.
. Dégraissage :

| | |
|---|---|
| NaOH | 50 g |
| Agent tensio-actif | 0,01 g |
| Eau | 1000 ml |
| Température | 50°C |
| Durée | 30 sec |

. Polissage électrolytique :

| | |
|---|---|
| H₃PO₄ 85% | 600 ml |
| H₂SO₄ 92% | 200 ml |
| CrO₃ cristallisé | 5 g |
| H₂O | 200 ml |
| Température | 60°C |
| Densité de courant | 20 A/dm² |
| Durée | 120 sec |

. Désoxydation :

| | |
|---|---|
| H₃PO₄ 85% | 23 ml |
| CrO₃ cristallisé | 40 g |
| H₂O | 977 ml |
| Température | 100°C |
| Durée | 5 min |

. Micro-polissage électrolytique par formation d'une couche barrière :

| | |
|---|---|
| Acide tartrique | 30 g |
| H20 | 1000 ml |
| pH | ajusté à 5 à l'aide de NH₄OH |
| Température | 25°C |
| Durée | 3 min |
| Tension | 200 volts |

L'invention concerne également les produits obtenus, c'est-à-dire les pièces ou produits présentant une surface métallique ayant une rugosité toujours inférieure à 1,4 nm Ra et plus particulièrement inférieure à 1 nm, le plus souvent inférieure à 0,8 nm ou mieux 0,5 nm, illustrée en particulier par la surface de la figure 2.

De ce fait, ces surfaces possèdent des qualités optiques améliorées de façon simple et au moindre coût, en particulier une augmentation de la réflectivité et une diminution nette de la surface développée, comme cela a été déjà dit. L'amélioration porte ainsi sur la réflectivité spéculaire lorsque les surfaces métalliques traitées sont des surfaces réfléchissantes, mais aussi sur la réflectivité totale lorsque les surfaces traitées sont des surfaces du type mill-finish ou des surfaces mates ou modifiées (brossées, martelées, lapidées, ou autres...) qui ne présentent pas de réflectivité spéculaire mais une réflectivité diffuse. De même, quelle que soit la source lumineuse utilisée, aucune irisation n'est à déplorer.

A titre d'illustration une bande laminée grand brillant permet après traitement selon l'invention d'obtenir une surface de rugosité Ra de 0,5 nm correspondant à une surface développée de 100,38%.

Si les surfaces métalliques selon l'invention peuvent être utilisées telles quelles pour des applications spéciales ne nécessitant pas ou peu de protection, cependant elles se montrent souvent fragiles pour des applications courantes. Il est alors avantageux de les protéger par exemple contre la corrosion ou l'abrasion. Cette protection peut être obtenue en conservant la couche anodique barrière obtenue selon l'invention (il suffit pour cela de ne pas effectuer le décapage final, le décapage intermédiaire devant alors être effectué, comme cela a été dit). On peut également recouvrir la surface, nue ou déjà recouverte de la couche d'oxyde selon l'invention, d'un vernis, d'un gel, d'un dépôt sous vide d'un ou plusieurs matériau(x) approprié(s) (SiOx, polymères, oxydes divers, ou de toute autre couche protectrice) et/ou d'une couche anodique de protection.

D'autre part, afin d'augmenter encore les qualités optiques des surfaces obtenues, il est possible également d'effectuer des dépôts appropriés, par exemple un dépôt bicouche optique de type interférentiel permettant d'obtenir une réflectivité pouvant atteindre 86%.

En fonction du choix de la couche de protection et/ou du niveau de performances visées, la mise en oeuvre de l'invention pourra être effectuée selon les diverses variantes, non limitatives, décrites ci-après.

### Variante 1 :

- dégraissage (acide, alcalin, solvant ou autres), puis lavage à l'eau
- polissage électrolytique, puis lavage à l'eau
- désoxydation à l'aide d'une solution contenant H₃PO₄ + CrO₃ ou autres, puis lavage à l'eau
- micropolissage par formation d'une couche barrière d'épaisseur 20 à 1400 nm (de préférence 100 à 500 nm), puis lavage à l'eau désionisée et séchage éventuel.

La surface métallique obtenue est ainsi recouverte d'une couche barrière protectrice particulièrement économique.

### Variante 2

- dégraissage (alcalin, acide, solvant, ou autres), puis lavage à l'eau
- polissage électrolytique, puis lavage à l'eau
- désoxydation (H₃PO₄ + CrO₃ ou autres), puis lavage à l'eau
- micropolissage par formation d'une couche barrière d'épaisseur comprise entre 20 et 1400 nm (de préférence de 100 à 500 nm), puis lavage à l'eau
- désoxydation (H₃PO₄ + CrO₃ ou autres), puis lavage H20 désionisée et séchage éventuel.

La surface métallique obtenue est alors nue; elle présente le meilleur gain de réflectivité et permet tout autre dépôt ultérieur.

### Variante 3

- dégraissage (alcalin, acide, solvant ou autres), puis lavage à l'eau
- polissage électrolytique, puis lavage à l'eau
- micropolissage par formation d'une couche barrière d'épaisseur comprise entre 20 et 1400 nm (de préférence de 100 à 500 nm), puis lavage à l'eau
- désoxydation (H₃PO₄ + CrO₃ ou autres) puis lavage à l'eau désionisée et séchage éventuel.

La surface métallique obtenue est nue, le procédé également économique (absence de décapage intermédiaire) et permet comme précédemment tout autre dépôt ultérieur ou une utilisation telle quelle pour des applications spéciales.

### Variante 4

- dégraissage (alcalin, acide, solvant ou autres), puis lavage à l'eau
- polissage électrolytique, puis lavage à l'eau
- micropolissage par formation d'une couche anodique poreuse à structure très fine (diamètre des cellules hexagonales de base inférieur à 30 nm),d'épaisseur comprise entre 20 et 2000 nm (de préférence 100 à 500 nm), puis lavage à l'eau
- désoxydation (H₃PO₄ + CrO₃ ou autres), puis lavage à l'eau désionisée et séchage éventuel.

Cette variante est analogue à la variante 3.

Comme cela a été dit plus haut, la surface métallique peut être recouverte à l'aide de différents dépôts ou couches protectrices appliqués directement sur la surface métallique selon l'invention mais également sur la couche anodique en vue de la renforcer et/ou d'en modifier les caractéristiques. Les possibilités non limitatives suivantes peuvent illustrer ces avantages :
- Utilisation d'une couche anodique barrière :
   . La variante 1 (sans décapage final de la couche barrière) permet d'obtenir une surface réfléchissante possédant un minimum de protection dans les conditions les plus économiques possibles. En fixant l'épaisseur de la couche entre 140 et 200 nm, on obtient un produit non coloré à forte réflectivité. Si on utilise une épaisseur plus grande, on obtient une coloration par interférence variable selon l'épaisseur;
   . la variante 2 (avec décapage de la couche barrière) suivie de la formation d'une couche barrière de protection identique à celle décrite ci-dessus conduit au produit le plus performant optiquement des cinq variantes décrites;
   . la variante 3 (avec décapage de la couche barrière, et sans décapage intermédiaire) suivie de la formation d'une couche barrière de protection permet d'obtenir un niveau de qualité intermédiaire entre les deux précédentes.

L'utilisation d'une couche barrière est particulièrement intéressante car l'épaisseur de la couche ainsi formée est la même sur toute la surface et peut être contrôlée avec une précision inférieure à 1% sur toute la surface traitée.
Il sera donc possible d'obtenir des surfaces qui présenteront une résistance à la corrosion et à l'abrasion tout en ayant une réflectivité supérieure à 80%, soit sans aucune irisation interférentielle ou coloration visible, soit colorées de manière homogène, la coloration étant fixée par l'épaisseur de la couche barrière.

A titre d'exemple les couches barrières peuvent être formées à l'aide de bains du type de celui vu plus haut pour le micro-polissage par couche barrière, la tension utilisée est alors de 110 à 140 V pour obtenir des épaisseurs de 140 à 200 nm.
- Utilisation de couche anodique poreuse :
   Les couches anodiques poreuses classiques, d'épaisseur 1000 à 5000 nm, peuvent être formées sur les surfaces issues des variantes 1 à 5 avec naturellement un colmatage final des pores selon les techniques habituelles.
- Utilisation de dépôt physique ou chimique monocouche :
   Des dépôts de type SiOx, de polymères organiques, ou d'oxydes divers, peuvent être appliqués soit par voie chimique, soit par les techniques de dépôts sous vide (PVD ou CVD) en remplacement des couches barrières citées plus haut. Leur épaisseur peut varier de 100 à 2000 nm. Les meilleures performances optiques sont obtenues à partir de la variante 2. Les propriétés de protection sont comparables à celles de la couche anodique poreuse.
- Utilisation de vernis ou de gels :
   Les vernis ou gels de natures diverses peuvent être appliqués sur les surfaces traitées par exemple selon les variantes 1,2 et 3.
- Utilisation de dépôts multicouches :
   De nombreuses combinaisons de matériaux déposés par voie physique ou chimique sont possibles; par exemple la variante 1 comportant la formation d'une couche barrière (par exemple d'épaisseur 140 nm), ou de façon équivalente d'une couche poreuse à structure très fine, puis le dépôt par exemple par évaporation sous vide d'une couche de SiO₂ (par exemple d'épaisseur 150 nm) conduit à une protection ayant une résistance à la corrosion améliorée tout en conservant une réflectivité élevée de la surface.
- Utilisation de dépôts bicouches interférentiels :

Pour obtenir un renforcement des propriétés de réflectivités, il est connu, comme cela a été déjà vu, de réaliser un double dépôt sous vide d'oxydes d'épaisseur et d'indice de réfraction appropriés sur une surface métallique polie.
L'utilisation d'un seul bicouche permet d'obtenir une réflectivité de 86%.
Un nombre élevé de bicouches identiques déposés sur une même surface pourrait permettre à la limite une réflectivité de près de 100%.

A titre d'exemples non limitatifs on peut citer les bicouches suivants :
- variante 1 + Al₂O₃ barrière (e= 76 à 83 nm) + TiO₂ (e= 55 à 61 nm)
- variante 1 + Al₂O₃ barrière (e= 76 à 83 nm) + ZrO₂ (e= 61 à 67 nm)
- variante 1 + Al₂O₃ barrière (e= 76 à 83 nm) + Ta₂O₅ (e= 59 à 65 nm)
- variante 2 + SiO₂ (e= 86 à 95 nm) + ZrO₂ (e= 61 à 67 nm)
- variante 2 + Al₂O₃ barrière (e= 76 à 83 nm) + TiO₂ (e= 55 à 61 nm)
- variante 2 + MgF₂ (e= 91 à 100nm) + TiO₂ (e= 55 à 61 nm)
- variante 2 + Al₂O₃ barrière (e= 76 à 83 nm) + ZrO₂ (e= 61 à 67 nm).

Pour chaque type d'oxyde, le domaine des épaisseurs (e) indiquées permet d'obtenir un compromis entre la réflectivité maximale et la suppression des colorations interférentielles résiduelles.

Les exemples ci-dessus sont aussi applicables aux variantes 3,4 et 5.

Les dépôts bicouches peuvent être effectués directement sur la surface métallique obtenue selon l'invention, mais on peut également utiliser comme première couche dudit dépôt bicouche la couche anodique barrière ou poreuse à structure très fine obtenue lors du traitement de micropolissage, la seconde couche étant un oxyde diélectrique transparent d'indice de réfraction en général supérieur à 2.
- Utilisation de dépôts multicouches mixtes :
   Ils sont utilisés à la fois pour optimiser les propriétés de résistance à la corrosion et à l'abrasion et pour obtenir le renforcement des propriétés optiques de type interférentiel.
   Pour cela les dépôts bicouches peuvent aussi être déposés sur une couche métallique (par exemple d'Al ou d'Ag) opaque, elle-même déposée sur la surface métallique obtenue selon l'invention recouverte ou non de la couche barrière ou microporeuse à structure très fine formée lors du micropolissage et/ou recouverte d'un autre dépôt de protection (par exemple une couche anodique barrière). Par exemple on peut former une couche anodique classique (typiquement d'épaisseur 2000 nm) suivie d'un triple dépôt sous vide : Al (50 à 100 nm) puis Al₂O₃ (ou SiO₂ ou MgF₂) et TiO₂ (ou ZrO₂ ou Ta₂O₅) avec les épaisseurs indiquées ci-dessus pour les dépôts bicouche interférentiels. Les réflectivités sont identiques à celles citées ci-dessus (86%), mais le produit est coûteux. Ils s'appliquent particulièrement aux surfaces métalliques obtenues dans les variantes 1 à 5.
- Utilisation de couches anodiques mixtes

Dans certains cas, il peut être avantageux de réaliser la protection de la surface par la formation successive d'une couche poreuse et d'une couche barrière. Cela s'applique en particulier aux surfaces métalliques obtenues dans les variantes 1 à 5.

L'invention concerne aussi l'utilisation des produits obtenus ayant une surface métallique telle quelle ou avantageusement recouverte par un dépôt destiné à améliorer sa protection et/ou ses qualités optiques (réflectivité, coloration...). On peut avantageusement utiliser ces produits, particulièrement performants tout en étant économiques, dans le domaine des réflecteurs optiques pour toutes longueurs d'onde, plus particulièrement dans le domaine de l'éclairage ou du chauffage, mais aussi des disques d'ordinateur, des tambours de photocopieurs ou d'imprimantes, des miroirs à hautes performances, des circuits microélectroniques, des constituants de micromécanique, des surfaces décoratives réfléchissantes, des réflecteurs divers, etc...

A titre d'illustration de l'invention le tableau 1 donne les résultats de rugosité et de réflectivité de surfaces métalliques à base d'aluminium obtenues selon l'art antérieur ou selon l'invention avec ou sans dépôt supplémentaire. La réflectivité spéculaire est donnée dans le sens transversal de laminage (R20T) ou dans le sens longitudinal (R20L).

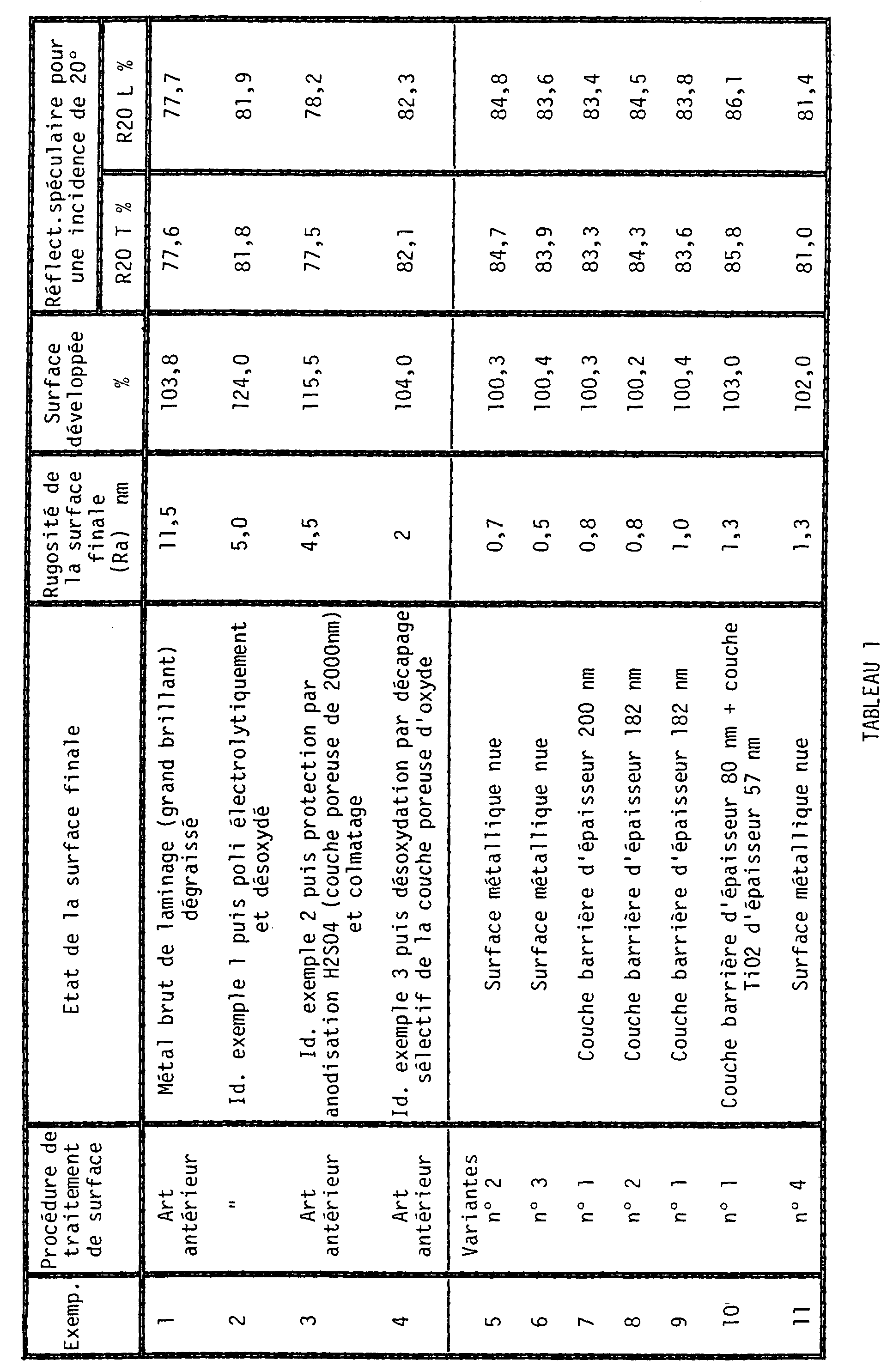

Dans les exemples préparés selon les variantes 2,3 et 4, les couches anodiques ont été formées sous 200 V durant l'étape de micropolissage anodique selon l'invention et avaient une épaisseur de 260 nm.

On voit que la surface métallique selon l'invention présente une rugosité nettement inférieure à celle des surfaces obtenues selon l'art antérieur et ainsi procure un gain significatif de réflectivité.

Il est remarquable de noter que lorsque la surface métallique selon l'invention est recouverte d'un dépôt, ce dépôt conserve une très faible rugosité, parfois même inférieure à 1 nm (ce qui est un avantage) et généralement significativement inférieure à celle obtenue dans l'art antérieur; de même la réflectivité est améliorée par rapport à celle de surfaces polies selon l'art antérieur et recouverte d'un même dépôt.

Il en va de même pour tous les types de protections décrits plus haut : le gain apporté par la seconde étape de brillantage -le micro-polissage-est conservé.

## Revendications

1. Procédé de polissage d'une surface métallique comprenant une première étape de polissage classique par voie chimique ou de préférence électrolytique pour obtenir une rugosité comprise entre 4 et 10 nm, et une deuxième étape de micropolissage électrolytique par anodisation dans une solution d'acide minéral, organique ou mixte pour former une couche d'oxyde de type barrière.

2. Procédé selon la revendication 1 comprenant additionnellement un traitement de décapage sélectif de l'oxyde formé lors de la première étape de polissage et/ou lors de l'étape de micropolissage.

3. Procédé selon l'une quelconque des revendications 1 ou 2 caractérisé en ce que la surface métallique est à base d'Al, Mg, Ta, Ti, Zr, Hf ou de leurs alliages.

4. Procédé selon l'une quelconque des revendications 1 à 3 caractérisé en ce que la couche d'oxyde formée anodiquement lors du micropolissage est une couche barrière d'épaisseur comprise entre 20 et 1400 nm et de préférence entre 100 et 500 nm.

5. Procédé selon l'une quelconque des revendications 1 à 4 caractérisé en ce que la surface métallique de départ est du type brillant, grand brillant, brut de laminage, mat, brossé, martelé, lapidé, granité.

6. Procédé selon l'une quelconque des revendications 1 à 5 caractérisé en ce qu'il comporte une ou plusieurs étapes additionnelles de confection d'une ou plusieurs couches complémentaires pour la protection et/ou l'amélioration des qualités optiques de la surface métallique.

7. Procédé selon la revendication 6 caractérisé en ce que la ou les étapes additionnelles sont l'une au moins des opérations suivantes : formation anodique de couche barrière et/ou de couche anodique poreuse, dépôt par voie physique ou chimique, dépôt de vernis ou de gels.

8. Pièce ou produit possédant une surface métallique polie optionnellement obtenue selon les procédés des revendications 1 à 5, caractérisés en ce que la micro-rugosité de ladite surface métallique mesurée après la désoxydation par décapage sélectif de la couche anodique est inférieure à 1 nm(Ra) et de préférence inférieure à 0,8 nm(Ra).

9. Pièce ou produit selon la revendication 8 caractérisés en ce que la surface métallique polie résulte du traitement d'une surface de type brillant ou grand brillant.

10. Pièce ou produit selon la revendication 8 caractérisé en ce que la micro-rugosité se superpose à un état de surface de départ du type brut de laminage, mat, brossé, martelé, lapidé, granité.

11. Pièce ou produit selon l'une quelconque des revendications 8 à 10 recouverts d'une ou de plusieurs couches minces supplémentaires destinées à assurer la protection et/ou améliorer les caractéristiques optiques de la surface métallique.

12. Pièce ou produit selon la revendication 11 caractérisés en ce que la ou les couches minces appartiennent au groupe des couches anodiques, des dépôts par voie chimique ou physique monocouche ou multicouche et des vernis ou des gels.

13. Pièce ou produit selon l'une quelconque des revendications 8 à 12 caractérisés en ce que la surface polie est à base d'aluminium ou de ses alliages et en ce que les couches supplémentaires forment un bicouche optique interférentiel, dont la première couche est constituée d'alumine barrière ou poreuse formée anodiquement sur le substrat lors du micropolissage et la seconde couche est constituée par un oxyde diélectrique transparent d'indice de réfraction de préférence supérieur à 2.

14. Pièce ou produit selon l'une quelconque des revendications 8 à 12, caractérisés en ce que la surface métallique polie est recouverte d'une couche anodique protectrice, puis d'une couche métallique opaque, de préférence Al ou Ag, puis d'un ou de plusieurs dépôts bicouches interférentiels.

15. Pièce ou produit possédant une surface métallique polie selon l'une quelconque des revendications 8 à 12 caractérisés en ce qu'ils comportent une couche barrière formée lors du micropolissage d'épaisseur comprise entre 140 et 200 nm pour assurer la résistance de la surface à la corrosion et à l'abrasion tout en procurant une réflectivité spéculaire supérieure à 80% et l'absence de couleur interférentielle.

16. Utilisation des pièces ou produits résultant de l'une quelconque des revendications 1 à 15, aux domaines des optiques pour appareils d'éclairage ou chauffage, en particulier les surfaces réfléchissantes, les miroirs à hautes performances, des disques pour ordinateurs, des tambours de photocopieurs ou d'imprimantes, des circuits microélectroniques, des constituants de micromécanique, des surfaces décoratives réfléchissantes.

## Patentansprüche

1. Verfahren zum Polieren einer Metalloberfläche, mit einem ersten herkömmlichen Polierschritt auf chemischem oder vorzugsweise elektrolytischem Wege zur Erzeugung einer Rauheit von 4 bis 10 nm und einem zweiten elektrolytischen Mikropolierschritt durch Anodisation in einer Lösung aus Mineral-, organischer oder Mischsäure zur Bildung einer barriereartigen Oxidschicht.

2. Verfahren nach Anspruch 1, mit einer zusätzlichen Behandlung zum selektiven Beizen des beim ersten Polierschritt und/oder beim Mikropolierschritt gebildeten Oxids.

3. Verfahren nach einem der Ansprüche 1 oder 2, dadurch gekennzeichnet, dass die Metalloberfläche auf Basis von AI, Mg, Ta, Ti, Zr, Hf oder ihren Legierungen ist.

4. Verfahren nach einem der Ansprüche 1 bis 3, dadurch gekennzeichnet, dass die beim Mikropolieren anodisch gebildetete Oxidschicht eine Sperrschicht von 20 bis 1400 nm und vorzugsweise 100 bis 500 nm Dicke ist.

5. Verfahren nach einem der Ansprüche 1 bis 4, dadurch gekennzeichnet, dass die Ausgangsmetalloberfläche glänzenden, hochglänzenden, gewalzten, matten, gebürsteten, gehämmerten, geschliffenen, körnigen Typs ist.

6. Verfahren nach einem der Ansprüche 1 bis 5, dadurch gekennzeichnet, dass es einen oder mehrere zusätzliche Schritte zwecks Herstellung einer oder mehrerer Komplementärschichten zum Schutz und/oder zur Verbesserung der optischen Eigenschaften der Metalloberfläche umfasst.

7. Verfahren nach Anspruch 6, dadurch gekennzeichnet, dass es sich bei dem oder den zusätzlichen Schritten um mindestens eines der folgenden Verfahren handelt: anodische Bildung einer Sperrschicht und/oder eines porösen anodischen Überzugs, physikalische oder chemische Abscheidung, Abscheidung von Lacken oder Gelen.

8. Werkstück oder Produkt mit einer wahlweise nach den Verfahren der Ansprüche 1 bis 5 erzeugten polierten Metalloberfläche, dadurch gekennzeichnet, dass die nach erfolgter Desoxidation durch selektives Beizen des anodischen Überzugs gemessene Mikrorauheit weniger als 1 nm(Ra) und vorzugsweise weniger als 0,8 nm(Ra) beträgt.

9. Werkstück oder Produkt nach Anspruch 8, dadurch gekennzeichnet, dass die polierte Metalloberfläche aus der Behandlung einer Oberfläche glänzenden oder hochglänzenden Typs hervorgeht.

10. Werkstück oder Produkt nach Anspruch 8, dadurch gekennzeichnet, dass die Mikrorauheit eine Ausgangsoberflächenbeschaffenheit gewalzten, matten, gebürsteten, gehämmerten, geschliffenen, körnigen Typs überlagert.

11. Werkstück oder Produkt nach einem der Ansprüche 8 bis 10 mit einem Überzug aus einer oder mehreren dünnen zusätzlichen Schichten, die dazu bestimmt sind, Schutz zu gewährleisten und/oder die optischen Eigenschaften der Metalloberfläche zu verbessern.

12. Werkstück oder Produkt nach Anspruch 11, dadurch gekennzeichnet, dass die dünne oder die dünnen Schichten zur Gruppe der anodischen Überzüge, der ein- oder mehrschichtigen chemischen oder physikalischen Abscheidungen und der Lacke und Gele gehören.

13. Werkstück oder Produkt nach einem der Ansprüche 8 bis 12, dadurch gekennzeichnet, dass die polierte Oberfläche auf Basis von Aluminium oder seiner Legierungen ist und dass die zusätzlichen Schichten einen zweischichtigen optischen Interferenzüberzug bilden, dessen erste Schicht aus einer porösen bzw. eine Sperre bildenden Aluminiumoxidschicht besteht, die beim Mikropolieren anodisch auf dem Substrat erzeugt wird, und dessen zweite Schicht aus einem transparenten dielektrischen Oxid mit einer Brechzahl von vorzugsweise größer als 2 besteht.

14. Werkstück oder Produkt nach einem der Ansprüche 8 bis 12, dadurch gekennzeichnet, dass die polierte Metalloberfläche mit einem anodischen Schutzüberzug, dann mit einem opaken Metallüberzug, vorzugsweise aus AI oder Ag, und dann mit einem oder mehreren zweischichtigen Interferenzüberzügen versehen ist.

15. Werkstück oder Produkt mit einer polierten Metalloberfläche nach einem der Ansprüche 8 bis 12, dadurch gekennzeichnet, dass es eine beim Mikropolieren gebildete Sperrschicht von 140 bis 200 nm Dicke aufweist, um die Korrasions- und Abriebfestigkeit der Oberfläche zu gewährleisten und dabei gleichzeitig regelmäßiges Reflexionsvermögen zu verleihen und um das Auftreten von Interferenzfarben zu verfrindern.

16. Verwendung der nach einem der Ansprüche 1 bis 15 hergestellten Werkstücke oder Produkte im Bereich der Optiken für Leuchten oder Heizgeräte, insbesondere Reflexionsflächen, Hochleistungsspiegel, im Bereich der Computerplatten, Kopierer- oder Druckerwalzen, Mikroelektronikschaltungen, mikromechanischer Bauteile, dekorativer Reflexionsflächen.

## Claims

1. Process for polishing a metal surface comprising a first conventional polishing stage by chemical or preferably electrolytic means in order to obtain a roughness between 4 and 10 nm, and a second electrolytic micro-polishing stage by anodizing in a solution of mineral, organic or mixed acid to form an oxide layer of the barrier type.

2. Process according to claim 1, comprising additionally a selective pickling treatment of the oxide formed during the first polishing stage and/or during the micro-polishing stage.

3. Process according to either of claims 1 or 2 characterized in that the metal surface is based on Al, Mg, Ta, Ti, Zr, Hf or their alloys.

4. Process according to any one of claims 1 to 3, characterized in that the oxide layer formed anodically during micro-polishing has a thickness of between 20 and 1400 nm and preferably between 100 and 500 nm.

5. Process according to any one of claims 1 to 4 characterized in that the starting metal surface is of the bright, extra-bright, mill finish, matt, brushed, hammered, pebbled, or wrinkle-finish type.

6. Process according to any one of claims 1 to 5, characterized in that it comprises one or more additional stages for producing one or more complementary layers for protecting the metal surface and/or improving its optical properties.

7. Process according to claim 6, characterized in that the additional stage or stages are at least one of the following operations : anodic formation of a barrier layer and/or a porous anodic layer, deposition by physical or chemical means, deposition of varnish or gels.

8. Part or product having an optionally polished metal surface obtained according to the processes of claims 1 to 5, characterized in that the micro-roughness of the said metal surface measured after deoxidizing the anodic layer by selective pickling is less than 1 nm (Ra) and preferably less than 0.8 nm (Ra).

9. Part or product according to claim 8 characterized in that the polished metal surface results from the treatment of a surface of the bright or extra-bright type.

10. Part or product according to claim 8 characterized in that micro-roughness is superimposed on the starting state of the surface of the mill finish, matt, brushed, hammered, pebbled, or wrinkle-finish type.

11. Part or product according to any one of claims 8 to 10 covered with one or more additional thin layers intended to ensure protection of the metal surface and/or to improve its optical properties.

12. Part or product according to claim 11 characterized in that the thin layer or layers belong to the group of anodic layers, mono-layers or multi-layers deposited by chemical or physical means and varnishes or gels.

13. Part or product according to any one of claims 8 to 12 characterized in that the polished surface is based on aluminium or its alloys and in that the supplementary layers form an interference optical bi-layer, the first layer of which consists of an alumina barrier or of porous alumina formed anodically on the substrate during micro-polishing and the second layer consists of a transparent dielectric oxide with a refractive index preferably greater than 2.

14. Part or product according to any one of claims 8 to 12 characterized in that the polished surface is covered with a protective anodic layer, followed by an opaque metal layer, preferably Al or Ag, followed by one or more interference bi-layer deposits.

15. Part or product possessing a polished metal surface according to any one of claims 8 to 12 characterized in that it comprises a barrier layer formed during micro-polishing with a thickness of between 140 and 200 nm to ensure resistance of the surface to corrosion and abrasion while producing a specular reflectivity greater than 80% and the absence of interference colour.

16. Use of parts or products resulting from any one of claims 1 to 15, in the fields of optics for lighting or heating equipment, in particular reflecting surfaces, high performance mirrors, computer disks, copier or printer drums, micro-electronic circuits, micro-mechanical components or decorative reflecting surfaces.
